# EUROPEAN PATENT APPLICATION

(11) **EP 4 821 746 A1**
(43) Date of publication of application: **14.10.2026**
(21) Application number: 25170148.8
(22) Date of filing: 11.04.2025
(51) Int. Cl.: B60L 53/30, B60L 53/67, B60L 53/31

(54) **POWER MANAGEMENT SYSTEM FOR ALLOCATING POWER MODULES TO OUTPUT**

(71) Applicant: Siemens Aktiengesellschaft, 80333 München (DE)
(72) Inventor: The designation of the inventor has not yet been filed
(74) Representative: Siemens Patent Attorneys

(57) **Abstract**

There is described a power management system (100), comprising:
i) at least two power modules (110, 110), including a first power module (110) and a second power module (111);
ii) at least one output (120);
iii) at least two switches (130, 131), including a first switch (130) to connect the first power module (110) and/or the second power module (111) to the output (120), and a second switch (131) to connect the first power module (110) with the second power module (111); and
iv) a control system, configured to:
a) identify an electric path that connects at least one of the power modules (110, 111) to the output (120);
b) adjust, in particular equalize, the voltage of the output (120) and the voltage of the at least one power module (110, 111) in the electric path with respect to each other; and
c) use at least one of the switches (130, 131) to open/close the electric path.

## Description

### Field of the Invention

The invention refers to a power management system, comprising a first power module and a second power module, at least one output, at least two switches, including a first switch to connect the first power module and/or the second power module to the output and a second switch to connect the first power module with the second power module, and a control system, configured to: identify an electric path that connects at least one of the power modules to the output and allocate the at least one power module to said electric path, adjust the electric load at the output and the electric load at the at least one power module in the electric path, and use at least one of the switches to open/close the electric path.

The invention can hence relate to the technical field of power management systems, in particular with respect to electromobility.

### Technical Background

Electromobility (E-mobility) refers to the use of electric vehicles (EVs) and the infrastructure that supports their operation. A critical component of this system is EVSE (Electric Vehicle Supply Equipment), which provides the interface between the electrical grid and an EV for safe and efficient charging. EVSE include various charging solutions, ranging from AC chargers (used in homes and workplaces) to DC fast chargers (found in public charging stations for rapid energy transfer). An EVSE ensures proper connection between the electric vehicle and the power source, regulates voltage and current, and includes safety mechanisms such as ground fault protection and overcurrent detection.

Most of the current EVSEs comprise several power modules (such as AC/DC converters) that are connected to one or more outputs (such as a charging cable) via a matrix of contactors (the so-called switching matrix), e.g., the Sicharge D system. The switching matrix can hereby join the power of one or more power modules (via one or more contactors) to a given output, thus increasing or decreasing the available power according to what the vehicle being charged is requesting. On the basis of this, a software/algorithm is needed to control the power modules (in particular their voltage/current setpoints) and to close/open the contactors within the switching matrix.

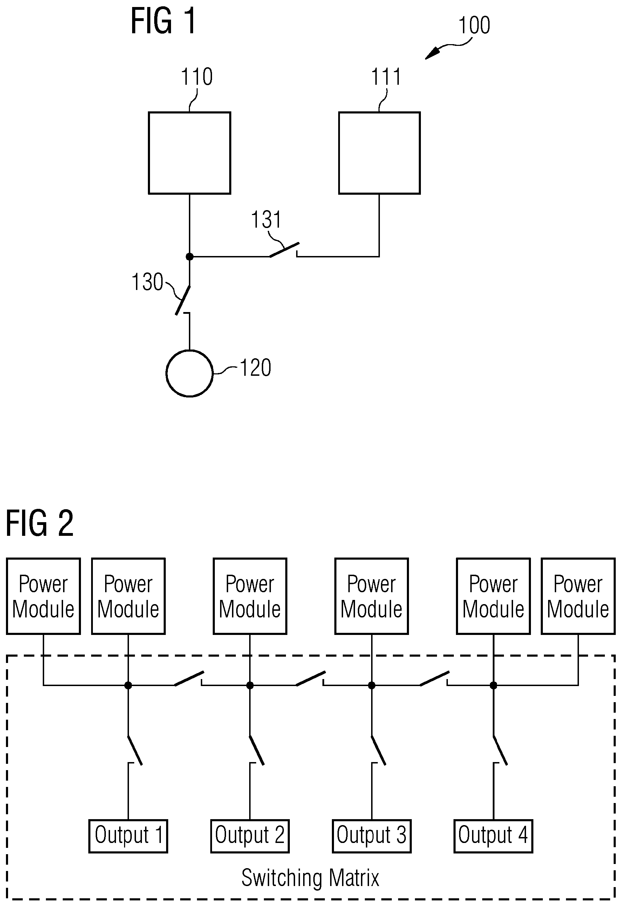

Figure 2 shows an example of a charging station as an example of an EVSE. As described above, the charging station comprises a plurality of power modules (e.g. AC/DC converters). Further, the charging station comprises a plurality of outputs (e.g. charging cables). The switching matrix comprises a plurality of switches (contactors) that enable a plurality of interconnections between the power modules and the outputs. While first switches enable connection between output and power module, second switches enable connection between the power modules. It becomes clear that a large variety of electric paths (between the power modules and the outputs) can be provided by the switching matrix.

Conventionally, there is a limited number of predefined electric paths, wherein one or more power modules are connected to a respective output, e.g. depending how many electric vehicles are charged at the same time. For this purpose, a respective software/algorithm is used per each case.

However, the conventional solutions may suffer several drawbacks. Due to the high electric loads (voltages/currents/power) in the charging station, especially the switches may be easily damaged. For example, solder points may be formed, thereby decreasing the performance of the system. In particular, switching operations under high electric load may significantly reduce the lifetime of the system. Further, conductors and/or power modules may be damaged, for example due to frequent use, manufacturing issues, or switching operations under high electric load. In case that a part of the system (e.g. a switch and/or power module) is damaged, the system will simply fail and cannot be used anymore.

### Summary of the invention

There may be a need to provide an efficient and flexible power management system. A system, a method, and a data program product are described in the following.

According to a first aspect of the invention, there is described a power management system (e.g. an EVSE), comprising:
i) at least two power modules (e.g. power converters), including (at least) a first power module and a second power module;
ii) at least one output (e.g. a charging cable);
iii) at least two switches (e.g. contactors), including
   iiia) a first switch to connect the first power module and/or the second power module to the output (in particular wherein the first switch is an output-associated switch);
   iiib) a second switch to connect the first power module with the second power module (in particular wherein the second switch is a power module associated switch); and
iv) a control system (e.g. one or more processors, a system controller, a hardware/software, etc.), configured to: identify/select an electric path that connects at least one of the power modules (through at least one of the switches) to the output (e.g. based on evaluating at least one of free electric paths, used electric paths, blocked electric paths, prioritized electric paths, preconfigured electric paths, etc.), and in particular at least one of the following:
   a) allocate/deallocate the at least one power module to/from the electric path;
   b) adjust (in particular equalize) the electric load (e.g. voltage/current/power) at the output and the electric load (e.g. voltage/current/power) at the at least one power module in the electric path (with respect to each other) (in particular adapt the voltage at the power module to the voltage at the output) (in other words: adapt the electric load setpoints) (and subsequently),
   c) use at least one of the switches (in the electric path) to open/close the electric path.

According to a second aspect of the invention, there is described a method of operating/managing a power management system (e.g. with at least one power module, at least one output, and at least one switch, in particular as described above), the method comprising:
i) identifying an electric path that connects at least one power module to an output,
ii) allocating/deallocating the at least one power module to/from the electric path,
iii) adjusting, in particular equalizing, the electric load at the output and the electric load at the at least one power module in the electric path, (and subsequently)
iv) using the at least one switch (in the electric path) to open/close the electric path.

According to a third aspect of the invention, there is described a computer program product, configured to perform, when used on a computer (in particular comprising at least one processor), a method as described above. In an embodiment, such a computer program product may also be used in the control system described above.

According to a fourth aspect of the invention, there is described a data processing device (in particular comprising at least one processor), configured to perform a method as described above.

In the context of the present document, the term "power management system" may in particular refer to a system/arrangement, wherein at least one power module can be electrically connected to an output via a switch. Such a power management system may comprise a plurality of power modules and switches, so that a large variety of electric paths between power module(s) and output is possible. Accordingly, an efficient management/control may be crucial to organize the connections in such a manner that the required electric paths (with the desired power) can be provided. In other words, different power modules can be allocated to an electric path, connecting said power modules to an output. An example of such a power management system may be a charging station in electromobility. Hereby, the main charging station (with the power modules) may be connected to one or more dispenser stations (with one or more respective outputs).

In the context of the present document, the term "power module" may in particular refer to a device that is suitable to manage power conversion and/or regulation, in particular between an electrical grid and an electric vehicle battery. A power module may for example comprise a power converter, in particular at least one of an AC/DC converter, a DC/DC converter, a DC/AC converter. In an embodiment, one or more power modules may be arranged in a (cabinet of a) charging station.

In the context of the present document, the term "output" (or output device/module) may in particular refer to a device suitable as an interface to provide power from the power module, for example to an electric vehicle. In an embodiment, the output may comprise at least one of a charging cable, a connector, a connector for a charging cable, a plug. In a further example, the output may comply with a specific (e-mobility) standard.

In the context of the present document, the term "control system" may in particular refer to a hardware/software configured to manage the above described power management system (such as a charging station). In an embodiment, the control system may be implemented as one or more processors or a controller. The control system may be arranged in a charging station or may operate (at least partially) from remote, e.g. in a control station.

According to an exemplary embodiment, the invention may be based on the idea that a power management system can be operated in an efficient and flexible manner, when an electric path (out of a plurality of possible electric paths) from at least one power module to an output (via at least one switch) is identified, the at least one power module is allocated to the identified electric path, and the at least one switch in the electric path is then closed (thereby enabling provision of power). Preferably, the electric loads within the electric path are adjusted (between power modules and output) before closing the switch(es). In the same manner, the electric path can also be opened again (preferably electric loads are adjusted before). Using such an disclosure, any number of power modules, switches, and outputs (and their respective interconnections) within the power management system may be handled in an efficient manner. This may provide a high degree of flexibility regarding the architecture of the power management system, in particular in cases where the power management system comprises a high number of power modules and/or outputs. With the described disclosure, any configuration may be flexibly handled, while special situations (such as blocked paths, prioritized paths, or damaged parts of the system) may be taken into account.

The described disclosure may enable modularity/portability of the system. In a flexible manner, additional power modules may be added and connected to different outputs (for example in a charger and dispenser system); thus, the system can be adapted to any use case. Thereby, any EVSE composed of power modules/switching matrix can be easily integrated (faster time to market), so that costs may be decreased. In a specific example, there may be six power modules and six outputs, so that there are many possible electric paths in between. But such a situation may be flexibly managed with the described disclosure.

Conventionally, there is a different software applied for each of a limited number of predefined scenarios (connection paths). Hence, only the predetermined scenarios can be applied in practice. Further, in case that one part of the system (e.g. a switch or power module) is damaged, the whole system will fail.

In contrast, the described disclosure enables a high flexibility and enables an unlimited number of possible electric paths that can adapt to any scenario. The control system can further adapt automatically in case a power modules or a contactor is damaged; e.g. by blocking an electric path through the damaged switch/power module. As a consequence, even with a damaged part, the system can be fully operative. Thus, for example the following system issues may be efficiently addressed: contactors that do not close/open, power modules that get damaged, adapt the allocation strategy between power modules and outputs, avoid generation of short circuits.

The disclosure may take in particular into account the high electric loads during system operation by adjusting the electric load in the identified electric path before opening/closing the switch(es) of said electric path. Thereby, the following advantages may be provided:
i) proper closing of the contactors: ensuring that the voltage between the terminals is below a certain threshold to avoid contactor damage.
ii) proper opening of the contactors: ensuring that there is no current crossing the contactors before opening, thus avoiding damage.

In an exemplary embodiment, the described disclosure can be integrated into a library shared across all EVSEs composed of power modules/switching matrix, with proven functionality and tests associated with it, thus providing less errors and less debugging time. The disclosure may be implemented in microcontrollers and/or OS based systems, thereby being potentially platform independent.

Even though the power management system is described here in the context of electromobility, this is just an exemplary embodiment. In principle, the disclosure may be used in any system, where power modules are connected, via switches, to an output for establishing an electric path. Another application may be for example charging a railway vehicle; for example the vehicle is charged via the pantograph connected to the EVSE. The pantograph may therefore replace a traditional plug.

### Exemplary Embodiments

In an embodiment, the control system is further configured to set (assign) the closed electric path as a used electric path. Thereby, it is easily indicated in the system that this particular path is in use (operation) and cannot be used further. Accordingly, the control system may automatically identify another alternative electric path besides the used path.

In an embodiment, the control system is further configured to set the opened electric path as a free electric path. Thereby, it is easily indicated that this particular path is free (again) for use. The system can hence have an overview of free paths that can be selected.

In an embodiment, the control system is further configured to block an electric path (set this path as a blocked path) that at least partially extends through the used electric path. This may provide the advantage that only free electric paths are taken into account and identified by the control system. A path that is (at least partially) in use (and therefore blocked) is thus not considered anymore. In a further embodiment, a path may be blocked because it contains a damaged/broken part (e.g. a power module and/or switch). In another embodiment, a path may be blocked since it has been frequently used; and other paths should be used as well to distribute the load and increase the lifetime of the system. In an embodiment, the blocking of (used) paths may avoid short circuits. Thereby, an efficient and flexible management of the power system may be enabled.

In an embodiment, the control system is further configured to (when identifying the electric path): evaluate, if the identified electric path is at least one of a free electric path, a used electric path, a blocked electric path. This may provide the advantage that the system can automatically find a suitable electric path, thereby taking into account many/all existing connections and/or connections to be avoided.

In an embodiment, the control system is further configured to (when identifying the electric path): consider at least one (in particular a plurality of) predetermined electric path(s). This may provide the advantage that the electric path may be chosen from one or more predetermined/preconfigured paths. These may be already tested and/or suitable for specific applications. In an embodiment, the control system is further configured to (when identifying the electric path): consider the majority of, in particular all possible, electric paths. This approach may allow for maximum flexibility. Even in systems with a high number of power modules, outputs and switches, the system may keep an overview and identify the most efficient path for a specific application.

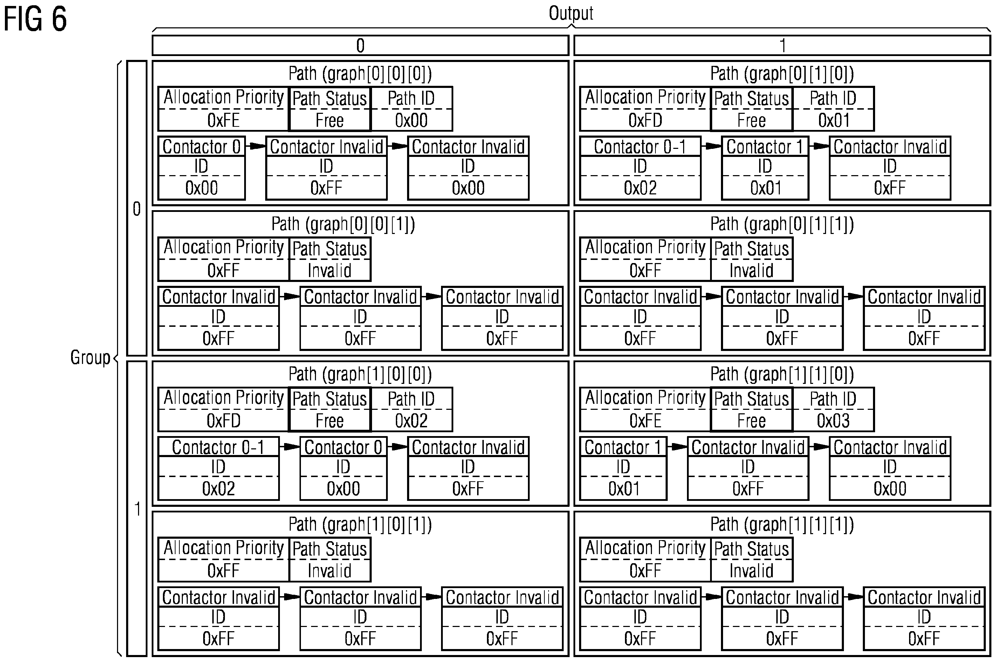

In an embodiment, the control system is further configured to assign a priority to at least one of the power modules and/or at least one switch and/or at least one specific electric path. This may provide the advantage that specific electric paths may be favorized over other paths. For example, a short electric path between a power module and an output may be preferred over a longer electric path (compare Figure 6). In another example, a specific path may be prioritized for a specific application, e.g. a specific number of electric vehicles to be charged at the same time. In a further embodiment, a specific path may be prioritized since the applied power module(s) and/or switches are known to be especially reliable and/or less worn.

In an embodiment, the control system is further configured to identify the electric path based on at least one (of the above identified) priority/priorities. Thereby, the identification of the electric path (and the operation of said path) may be done in a very efficient manner.

In an embodiment, the control system is further configured to evaluate (check), if the at least one switch in the identified electric path is electrically connected to at least one of the power modules (second switch). In case that the identified electric path is electrically connected to at least one of the power modules, it may be evaluated if said at least one power module is allocated to the electric path.

In an embodiment, the control system is further configured to turn off the at least one power module allocated to the electric path, in particular all power modules allocated to the electric path, before opening/closing the at least one switch in the identified electric path. This may provide the advantage that the switches may be protected from electric loads. Thereby, the lifetime of the switches (and the system as a whole) may be significantly increased. In an embodiment, power modules not allocated may be ignored since their electric load in the path may be zero.

In an embodiment, the control system is further configured to (when identifying the electric path): consider a (health) status of at least a part of the power management system, in particular at least one of the switches and/or at least one of the power modules. In an embodiment, the status comprises at least one of the following: a damaged part, a broken part, a frequently used part. This may provide the advantage that a damaged/broken part (e.g. power module and/or switch) can be identified and avoided (e.g. by assigning a low priority or blocking this part/path). In comparison to conventional examples, the system may still be efficiently operable, even though one or more parts do not function as required. In other words, the system may operate by avoiding/ignoring/bypassing the broken parts. In case that one path/part is frequently used, it may be avoided in order to increase the lifespan of the system (and using other paths/parts instead).

In an embodiment, the identification of the electric path comprises: avoid/block at least one part, in particular at least one of the switches and/or at least one of the power modules based on the status. Hence, only fully functional electric paths may be considered and identified, thereby increasing the efficiency and flexibility.

In an embodiment, the power management system further comprises a main station (e.g. charging station), in particular comprising the at least two power modules. In an embodiment, the power management system further comprises at least one dispenser station, in particular (electrically) coupled to the main station. The dispenser station may comprise at least one output. In an embodiment, the dispenser station is free of the power module(s). In an embodiment, the identified electric path connects the at least one power module in the main station with the at least one output in the dispenser station.

For example, in an electromobility context, a charging station may be connected to one or more dispenser stations, thereby spatially distributing the charging locations. An illustrative example may be a parking lot, where a plurality of dispenser stations are distributed, so that at each parking space, an electric vehicle can be charged. Using the described system, even a large power management system (e.g. comprising a main station and six dispenser stations, each with two or more outputs, e.g. 18 outputs in total) can be efficiently managed. The described system may enable a high degree of modularity, so that more and more dispenser stations (and power modules) may be added without changing the control system (software/algorithm).

In an embodiment, the power management system is configured for an electromobility, in particular electric vehicle charging, application. For example, the power management system may be configured as an EVSE, e.g. a charging station, in particular with one or more dispenser stations, as described above.

In an embodiment, the output comprises at least one of: a charging cable, a connector, a connector to a charging cable, a plug, an interface. In an embodiment, at least one of the switches is configured as at least one of a contactor, a relay, a connector/disconnector, selector, breaker. In an embodiment, at least one of the power modules comprises at least one of: an AC/DC converter, a DC/DC converter, a DC/AC converter. These may be some examples of favorable embodiments within a power system, in particular regarding electromobility, that may be technically and economically important.

In an embodiment, the method further comprises evaluating (considering) the status of the at least one switch and/or the at least one power module, in particular wherein the status comprises at least one of the following: a damage, broken part, a frequently used part. In an embodiment, the method comprises: avoiding/blocking the at least one switch and/or the at least one power module based on the status. Thereby, an efficient operation may be enabled, even though one or more parts may not be fully functional.

In an exemplary embodiment, the power management system is modularly built, offers different switching matrixes and/or offers different power module arrangements/power levels.

In an embodiment, the power management system may comprise a dedicated controller connected to the power modules and the switching matrix.

It should be noted that embodiments of the invention have been described with reference to various subject-matters. In particular, some embodiments have been described with reference to method claims, while other embodiments have been described with reference to apparatus claims. However, a skilled person will infer from the foregoing and the following description that, unless otherwise indicated, in addition to any combination of features belonging to one type of subject-matter, any combination of features relating to different subject-matter is also considered to be disclosed by this document. This is particularly the case between features of the method claims and features of the apparatus claims.

The aspects defined above and further aspects of the present invention result from the examples of embodiments to be described below and are explained by reference to the examples of embodiments. The invention is described in more detail below with reference to embodiments to which the invention is not limited.

### Brief Description of the Drawings

Figure 1 shows a power management system, according to an embodiment of the invention.
Figure 2 shows a power management system, according to a further embodiment of the invention.
Figure 3 shows a further power management system and Figure 4 shows a logic representation of said system, according to an embodiment of the invention.
Figure 5 shows a power management system with non-allocated power modules and an allocated power module, according to an embodiment of the invention.
Figure 6 shows a data matrix with electric path information, according to an embodiment of the invention.
Figure 7 shows a switch information and Figure 8 shows a power module information, according to exemplary embodiments of the invention.
Figure 9 shows a data matrix with used/blocked electric path information, according to an embodiment of the invention.
Figure 10 shows a flow-chart for closing a switch in an electric path, according to an embodiment of the invention.
Figure 11 shows a flow-chart for opening a switch in an electric path, according to an embodiment of the invention.

### Detailed Description of the Drawings

The representations in the drawings are schematic. It should be noted that in different illustrations, similar or identical elements or features are provided with the same reference signs or with reference signs that differ from the corresponding reference signs only within the first digit. In order to avoid unnecessary repetition, elements or features that have already been explained in relation to a previously described embodiment are not explained again at a later point in the description.

In addition, spatially relative terms such as "front" and "back", "up" and "down", "left" and "right", etc. are used to describe the relationship of one element to another element, as shown in the figures. For example, the spatially relative terms can apply to orientations used that deviate from the orientation shown in the figures. Obviously, these spatially relative terms refer only to a simplification of the description and the orientation shown in the figures and are not necessarily limiting, since an apparatus according to an embodiment of the invention may assume orientations other than those shown in the figures, in particular when it is used.

Figure 1 shows a power management system 100, according to an exemplary embodiment of the invention. The power management system 100 comprises two power modules: a first power module 110 and a second power module 111. The power management system 100 further comprises an output 120 to which the first power module 110 and/or the second power module 111 can be connected. For this purpose, the power management system 100 comprises two switches (contactors): a first switch 130 to connect the first power module 110 and/or the second power module 111 to the output 120, and a second switch 131 to connect the first power module 110 with the second power module 111. Accordingly, in this basic example, one or both power modules 110, 111 can be allocated to an electric path to the output 120, depending on the required output power (e.g. charging one or two vehicles at the same time).

A control system is further provided to identify an electric path that connects at least one of the power modules 110, 111 to the output 120 and to allocate one or both power modules 110, 111 to said electric path. Before closing one or both switches 130, 131, the electric load at the allocated power module(s) 110, 111 is equalized to the electric load at the output 120. For example, the voltage setpoint of the power module(s) 110, 111 is adjusted to the voltage setpoint of the output 120.

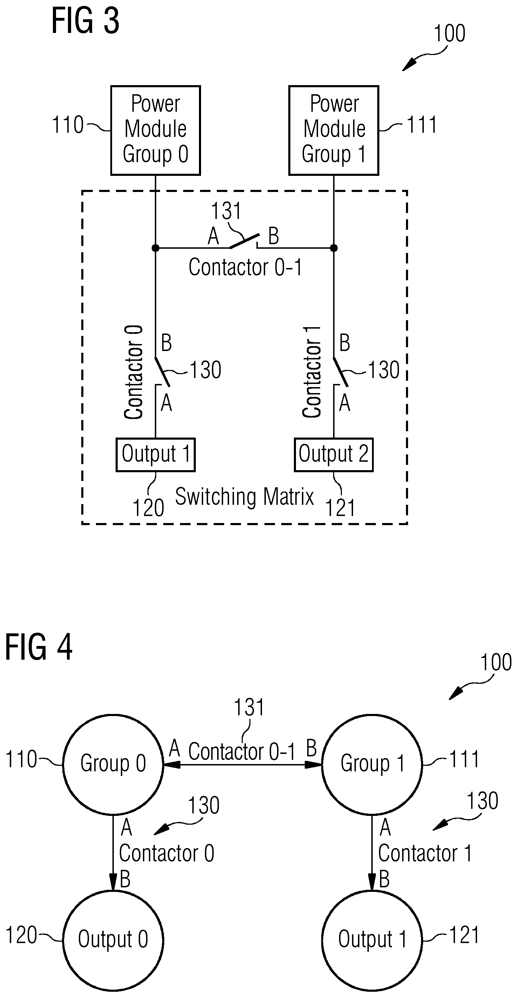

Figure 3 shows an example of the power management system 100 with two power modules 110, 111, two outputs 120, 121, two first switches 130 (one for each output 120, 121), and one second switch 131 (between the power modules 110, 111), according to an embodiment of the invention. Figure 4 shows a logic representation of the power management system 100 of Figure 3, as it can be used by the control system (algorithm), according to an embodiment of the invention.

The power modules 110, 111 can be arranged in parallel, hereby called groups (Group 0 and Group 1). In a first step, the power management system is converted to a graph: the graph edges are contactors, which are described by having terminations A and B. This is used to check if the contactor is connected to an output or a group and used to assure that the electric load (voltage) between the terminals of the contactor is within a (predefined) threshold before closing it. The graph nodes/vertices can be either groups or outputs.

In this example, there are several connections between groups and outputs that can be made (electric paths):
i) To Output 0:
   - Group 0, via Contactor 0.
   - Group 1, via Contactors 0-1 and 0.
ii) To Output 1:
   - Group 0, via Contactors 0-1 and 1.
   - Group 1, via Contactor 1.

These electric paths can be further described/classified, for example using the following statuses:
- Free: if the path is available for allocation.
- Blocked: if the path cannot be used due to some constraint, e.g., group already allocated with other path, damaged group, etc.
- Invalid: the path is not valid; it can never be used.
- In use: if the path is already used to connect a group to an output.
- Priority: if the path is preferred over other paths.

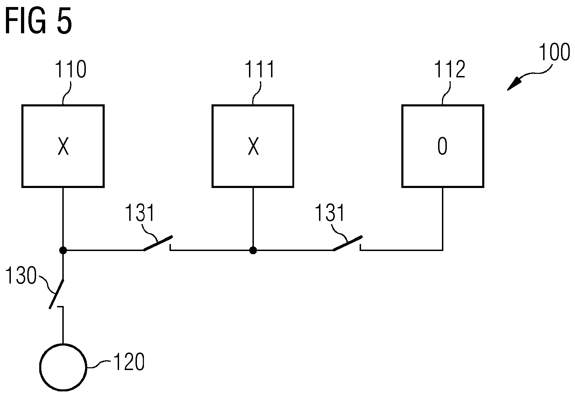

Figure 5 shows a power management system 100 with two non-allocated power modules 110, 111 and an allocated power module 112, according to an embodiment of the invention. In this example, three power modules 110, 111, 112 can be connected (in series) to an output 120. In this example, only one of the power modules 112 is allocated to the electric path, while the other two power modules 110, 111 are not allocated. Accordingly, when opening/closing the first switch 130, only the allocated power module 112 has to be taken into account and its electric load has to be adapted to the electric load of the output 120. Further, when opening/closing the second switches 131, the allocated power module 112 should be turned-off, thereby protecting the second switches 131 during the switching process. The electric load of the not allocated power modules 110, 111 in the electric path will be zero, so they can be ignored. In an example, the first switch 130 is not opened during switching; the switch 130 needs to be opened with equalization, since the electric load at the output 120 (in particular regarding the electric vehicle) may not be further controlled.

Figure 6 shows a data matrix with electric path information, according to an embodiment of the invention. This data matrix is based on the logical representation described for Figure 4 above. Here, the statuses of each possible electric path can be seen; in this example all four possible electric paths are free, yet the direct paths have another priority (0xFE) as the indirect paths (0xFD). In case multiple paths connecting a given group to an output are free, the path with highest allocation priority can be chosen.

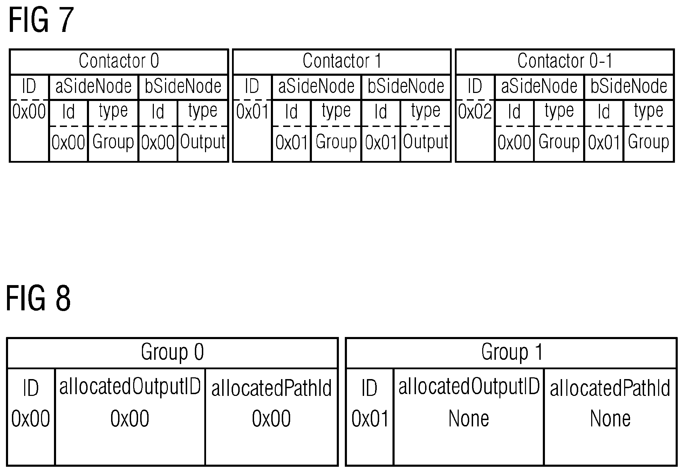

Figure 7 shows switch connection information, according to an embodiment of the invention. Each switch (contactor) can be described regarding what it is connecting from/to. Figure 8 shows group connection information, according to an embodiment of the invention. Each group (power module) can be described regarding which path it is allocated to.

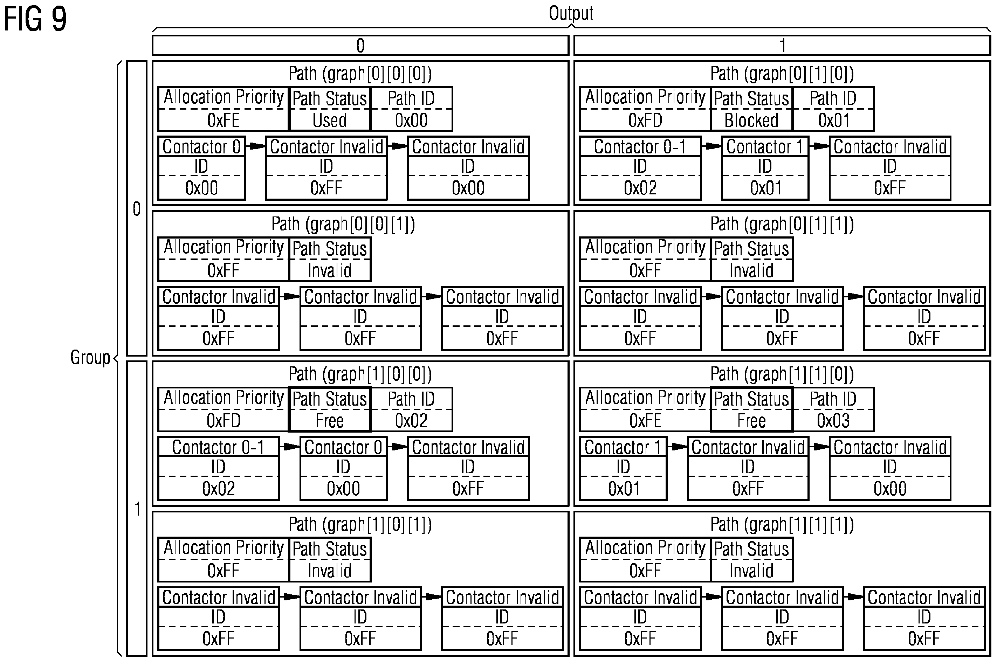

Figure 9 shows a further example of a data matrix comparable with Figure 6. Yet, in this example, the electric path 0 from Group 0 to Output 0 via Contactor 0 has been chosen. Therefore, this path is now set to "Used". The electric path 1 from Group 0 to Output 1 via Contactors 0-1 and 1 is not possible anymore and hence set to "Blocked".

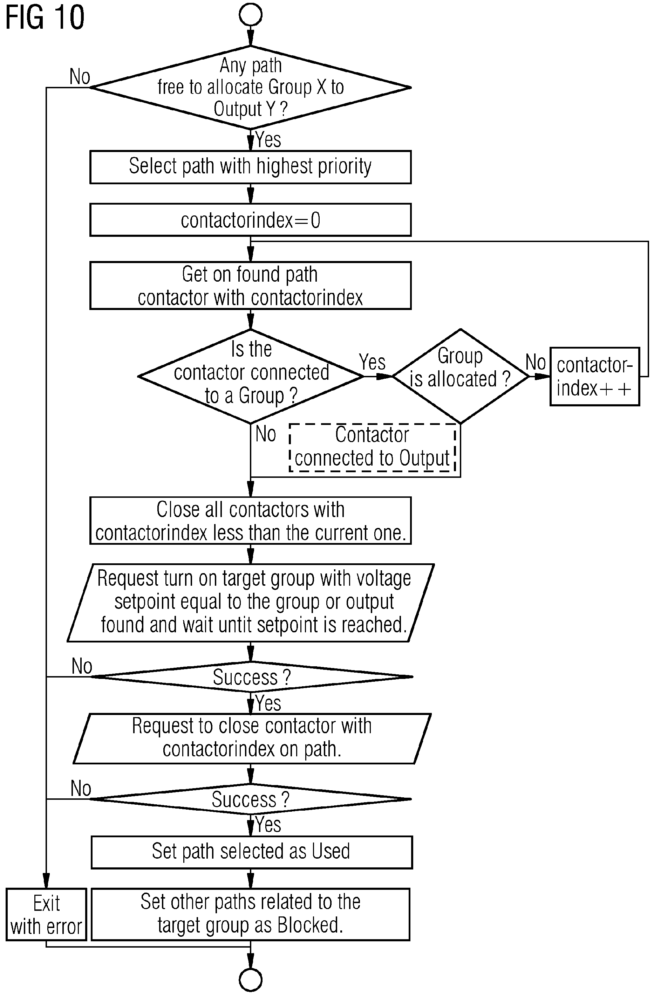

Figure 10 shows a flow-chart for closing a switch in an electric path, according to an exemplary embodiment of the invention, here with respect to requesting the allocation of Group 0 to Output 0. The path is free, so it is possible to allocate. The allocation process is done in the following steps in this example:
i) Identification of the electric path
   1. Check if there is any free path available to connect Group 0 to Output 0. If not, exit.
ii) Allocate power module to identified electric path
   2. For each contactor in the path:
   a. Check if the contactors are connected to a group which is already allocated or to an output.
      i. If the contactor is connected to a group already allocated, close all the contactors from Group 0 until the last contactor that connects to the allocated group (do not close the contactor connected to the allocated group).
      ii. If the contactor is connected to an output, close all the contactors from Group 0 until the last contactor that connects to the output (do not close the contactor connected to the output).
      iii. Exit the contactor check if (i) or (ii) happened.
iii) Adjust the electric load
   3. Request to the software that is integrating the algorithm library to turn on the Group 0 and to set the voltage setpoint of equal to the one on the allocated group or output.
iv) Close the switch(es)
   4. Wait until the voltage setpoint is reached and then request to the software that is integrating the algorithm to close the contactor connecting to the allocated group/output. At this point the contactor has equal voltages on its terminals.
v) Set closed electric path to used
   5. If the allocation is successful, block all paths that are using Group 0, since it is already allocated.

In case any of the contactors do not close or the voltage setpoint is not met, it may be reported that the action was not possible to be performed.

In this example:
1. The system would find the Path ID 0x00 as a free path.
2. The system would find the Contactor 0 connected to Output 0.
3. The system would request to set the voltage setpoint of Group 0 to be equal to Output 0 and turn it on.
4. The system would request closing the Contactor 0.

After this, the allocation process is finished, and the respective group status and graph tables are updated. Note that the path with ID 0x01 is now blocked, since Group 0 is allocated to Output 0 and can no longer be allocated to Output 1 (compare Figures 8 and 9).

Suppose that now a request is done to allocate Group 0 to Output 1. Since there are no free paths and Group 0 is allocated to Output 0, the request is denied.

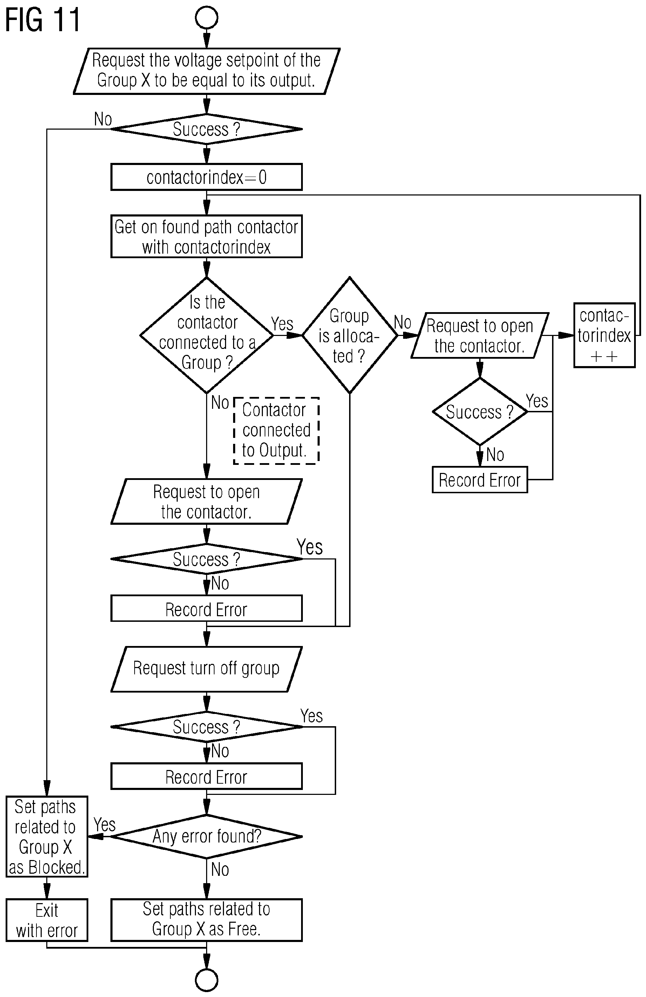

Figure 11 shows a flow-chart for opening a switch in an electric path, according to an exemplary embodiment of the invention. To deallocate a group from an output, the process is reversed. In this example, the Group 0 is to be deallocated from Output 0. The deallocation process is done in the following steps in this example:
i) Identify the electric path and adjust the electric load
   1. Request to set the voltage setpoint of Group 0 equal to the voltage at the Output 0 and current setpoint to 0 and wait until it is reached.
ii) Deallocate power module from identified electric path
   2. For each contactor in the path used for the allocation, if the contactor is connected to a group that is allocated, open it and exit the check of the contactors (if the connecting group is allocated, this means that all the contactors after the one checked are being used). Otherwise open it and continue check.
iii) Open the switch(es)
   3. Request to open Contactor 0.
   Request to turn off Group 0.
iv) Set open electric path to free
   4. If all is successful, set all paths connected to Group 0 as Free, otherwise, set all to Blocked.

In this example:
1. The system would request to set the voltage setpoint of Group 0 equal to the voltage at its output and current setpoint to 0 and wait until it is reached.
2. The system would find the Contactor 0 connected to Output 0.
3. The system would request to open Contactor 0.
4. The system would request to turn off Group 0.
5. If all is successful, all paths connected to Group 0 are set as Free, otherwise, all are set to Blocked.

It should be noted that the term "comprising" does not exclude other elements or steps, and the use of the article "a" does not preclude a multitude. Elements that are described in connection with different embodiments can also be combined. It should also be noted that reference signs in the claims should not be interpreted as limiting the scope of the claims.

Regardless of the grammatical gender of a particular term, it includes people with male, female or other gender identities.

### Reference signs

- 100: Power management system
- 110: First power module
- 111: Second power module
- 112: Further power module
- 120: Output
- 121: Further output
- 130: First switch
- 131: Second switch

## Claims

1. A power management system (100), comprising:
at least two power modules (110, 110), including a first power module (110) and a second power module (111);
at least one output (120);
at least two switches (130, 131), including
a first switch (130) to connect the first power module (110) and/or the second power module (111) to the output (120);
a second switch (131) to connect the first power module (110) with the second power module (111); and
a control system, configured to:
identify an electric path that connects at least one of the power modules (110, 111) to the output (120);
allocate/deallocate the at least one power module (110, 111) to/from the electric path;
adjust, in particular equalize, the electric load at the output (120) and the electric load at the at least one power module (110, 111) in the electric path; and
use at least one of the switches (130, 131) to open/close the electric path.

2. The power management system (100) according to claim 1, wherein the control system is further configured to:
set the closed electric path as a used electric path, and/or
set the opened electric path as a free electric path; and/or
block a further electric path that at least partially extends through the used electric path.

3. The power management system (100) according to claim 1 or 2, wherein the control system is further configured to, when identifying the electric path:
evaluate, if the identified electric path is at least one of a free electric path, a used electric path, a blocked electric path, an invalid electric path.

4. The power management system (100) according to one of the preceding claims, wherein the control system is further configured to, when identifying the electric path:
consider at least one predetermined electric path; and/or
consider all possible electric paths.

5. The power management system (100) according to one of the preceding claims, wherein the control system is further configured to:
assign a priority to at least one of the power modules (110, 111) and/or at least one specific electric path; and/or
identify the electric path based on at least one priority.

6. The power management system (100) according to one of the preceding claims, wherein the control system is further configured to:
evaluate, if the at least one switch (130, 131) in the identified electric path is electrically connected to at least one of the power modules (110, 111), and, if so, evaluate if said at least one power module (110, 111) is allocated to the electric path.

7. The power management system (100) according to claim 6, wherein the control system is further configured to:
turn off the at least one power module (110, 111) allocated to the electric path, in particular all power modules (110, 111) allocated to the electric path, before opening/closing the at least one switch (130, 131) in the identified electric path.

8. The power management system (100) according to one of the preceding claims, wherein the control system is further configured to, when identifying the electric path:
consider a status of at least one of the switches (130, 131) and/or at least one of the power modules (110, 111),
in particular wherein the status comprises at least one of the following: damage, broken, frequently used.

9. The power management system (100) according to claim 8, wherein the identification of the electric path comprises:
avoid/block at least one of the switches (130, 131) and/or at least one of the power modules (110, 111) based on the status.

10. The power management system (100) according to one of the preceding claims, further comprising:
a main station comprising the at least two power modules (110, 111); and
at least one dispenser station, coupled to the main station, and comprising the at least one output (120);
in particular wherein the identified electric path connects the at least one power module (110, 111) in the main station with the at least one output (120) in the dispenser station.

11. The power management system (100) according to one of the preceding claims, configured for an electromobility, in particular electric vehicle charging, application.

12. The power management system (100) according to one of the preceding claims,
wherein the output (120) comprises at least one of: a charging cable, a connector, a connector to a charging cable, a plug, an interface; and/or
wherein at least one of the switches (130, 131) is configured as a contactor; and/or
wherein at least one of the power modules (110, 111) comprises at least one of: an AC/DC converter, a DC/DC converter, a DC/AC converter.

13. A method of operating a power management system (100), the method comprising:
identifying an electric path that connects at least one power module (110, 111) to an output (120);
allocating/deallocating the at least one power module (110, 111) to/from the identified electric path;
adjusting, in particular equalizing, the electric load of the output (120) and the electric load of the at least one power module (110, 111) in the electric path; and
using at least one switch (130, 131) in the electric path to open/close the electric path.

14. The method according to claim 13, further comprising:
evaluating the status of the at least one switch (130, 131) and/or the at least one power module (110, 111), in particular wherein the status comprises at least one of the following: damage, broken, frequently used; and
avoiding the at least one switch (130, 131) and/or the at least one power module (110, 111) based on the status.

15. A computer program product, configured to perform, when used on a computer, in particular comprising at least one processor, a method according to claim 13 or 14.
